# EUROPÄISCHE PATENTANMELDUNG

(11) **EP 2 551 553 A1**
(43) Veröffentlichungstag der Anmeldung: **30.01.2013**
(21) Anmeldenummer: 12173711.8
(22) Anmeldetag: 27.06.2012
(51) Int. Cl.: F16H 57/08

(54) **Getriebeanordnung**

(30) Priorität: 29.07.2011 DE 102011080079
(71) Anmelder: ZF Friedrichshafen AG, 88038 Friedrichshafen (DE)
(72) Erfinder: Muro, Giuseppe, 88045 Friedrichshafen (DE)

(57) **Zusammenfassung**

Die Erfindung betrifft eine Getriebeanordnung, umfassend ein Planetengetriebe (4) mit einem jeweils ein Ende der Planetenradbolzen (20) haltenden Planetenträger (8), einem damit verbundenen, das jeweils andere Ende der Planetenradbolzen (20) haltenden Bolzenträger (10), wobei zumindest an einem Ende eines jeden Planetenradbolzens (20) ein Segment (22) ausgespart ist, dessen zur Bolzenlängsachse (24) rechtwinklige erste Fläche (26) an einem Längsanschlag und dessen zur Bolzenlängsachse (24) parallele zweite Fläche (28) an einem Drehanschlag anliegt, sowie ferner umfassend einen mit einem der beiden Träger (8, 10) verbundenen Kupplungskörper (30). Die Erfindung sieht vor, den Kupplungskörper (30) so auszubilden und anzuordnen, dass er mit den jeweiligen ersten Flächen (26) und zweiten Flächen (28) der ausgesparten Segmente (22) der Planetenradbolzen (20) zusammenwirkende Längs- und Drehanschläge bildet, so dass gesonderte, diese Anschläge bildende Mittel nicht notwendig sind.

## Beschreibung

Die Erfindung betrifft eine Getriebeanordnung gemäß dem Oberbegriff des Patentanspruchs 1 bzw. 6.

Planetengetriebe, bei denen die Planetenräder drehbar auf Planetenradbolzen gelagert und diese selbst gegen Drehung sowie axiale Verschiebung durch den Bolzenträgern zugeordnete Anschläge gesichert sind, sind allgemein bekannt. Gegenüber früheren Konstruktionen, bei denen die Planetenradbolzen beispielsweise mit einem der Bolzenträger verschweißt oder verstemmt waren, erlauben durch Anschläge gesicherte Planetenradbolzen eine zerstörungsfreie Demontage beispielsweise für den Fall einer erforderlichen Reparatur.

Aus der US 4 756 212 B1 ist bereits eine Getriebeanordnung der im Oberbegriff des Anspruchs 1 genannten Art bekannt, bei der die Planetenradbolzen durch einen am Bolzenträger (sidewall 20) angeordneten sowie mit einer Aussparung an den Planetenradbolzen zusammenwirkenden Sicherungsring gegen Drehung und Verschiebung in einer Richtung gesichert sind. Dazu ist in einer Innenumfangsfläche des Bolzenträgers eine Aufnahmenut vorgesehen, in die der offene, federnde Sicherungsring nach der Montage der Planetenradbolzen eingelegt wird. Eine Sicherung der Planetenradbolzen gegen eine Bewegung in der anderen axialen Richtung erfolgt in der Weise, dass die den Planetenradbolzen aufnehmende Aufnahmebohrung im Planetenträger (sidewall 18) gestuft ausgebildet ist, wodurch sich eine Anschlagfläche ergibt, an welcher der Planetenradbolzen stirnseitig anliegt. Ein mit dem Planetenträger beispielsweise über eine daran ausgebildete Außenverzahnung oder Nabe zu verbindender Kupplungs- oder Bremskörper wird unabhängig von der Montage der Planetenradbolzen montiert.

Die bekannte Konstruktion ist fertigungstechnisch und montagetechnisch verhältnismäßig aufwendig, da für die Drehsicherung und Verschiebesicherung der Planetenradbolzen zumindest in einer axialen Richtung gesonderte Bearbeitungsschritte und Bauteile erforderlich sind.

Weitere, ebenfalls Sicherungsringe nutzende Vorrichtungen zur Fixierung von Planetenradbolzen sind aus der DE 10 2009 001 985 A1 und der DE 10 2009 028 517 A1 bekannt.

Der Erfindung liegt die Aufgabe zugrunde, eine Getriebeanordnung der im Oberbegriff des Anspruchs 1 bzw. der im Oberbegriff des Anspruchs 6 genannten Art zu schaffen, die gegenüber der bekannten Lösung herstellungstechnisch und montagetechnisch vereinfacht ist.

Der Erfindung liegt die Erkenntnis zugrunde, dass ein ohnehin mit einem der Bolzenträger zu verbindender Kupplungskörper oder dergleichen bei einer entsprechenden Ausgestaltung zugleich die Funktion einer Längs- und Drehsicherung für die Planetenradbolzen zumindest in einer axialen Richtung bilden kann.

Die Erfindung geht daher aus von einer Getriebeanordnung, umfassend ein Planetengetriebe mit einem jeweils ein Ende der Planetenradbolzen haltenden Planetenträger, einem damit verbundenen, das jeweils andere Ende der Planetenradbolzen haltenden Bolzenträger, wobei zumindest an einem Ende eines jeden Planetenradbolzens ein Segment ausgespart ist, dessen zur Bolzenlängsachse rechtwinklige erste Fläche an einem Längsanschlag und dessen zur Bolzenlängsachse parallele zweite Fläche an einem Drehanschlag anliegt, sowie ferner umfassend einen mit einem der beiden Träger verbundenen Kupplungskörper oder dergleichen. Dabei ist erfindungsgemäß vorgesehen, dass der Kupplungskörper oder dergleichen so ausgebildet und angeordnet ist, dass er mit den jeweiligen ersten Flächen und zweiten Flächen der ausgesparten Segmente der Planetenradbolzen zusammenwirkende Längs- und Drehanschläge bildet.

Die Längs- und Drehanschläge werden gemäß einer Ausgestaltung der Erfindung dadurch gebildet, dass der Kupplungskörper oder dergleichen eine zu den ausgesparten Segmenten der Planetenradbolzen komplementäre, in diese eingreifende Umfangskante aufweist.

Eine konstruktiv günstige Ausgestaltung sieht vor, dass die ausgesparten Segmente der Planetenradbolzen radial nach außen weisen und mit einer Innenumfangskante des Kupplungskörpers zusammenwirken.

Die Längs- und Drehanschläge werden gemäß einer bevorzugten Ausgestaltung der Erfindung dadurch gebildet, dass der Kupplungskörper oder dergleichen zu den durch die ausgesparten Segmente gebildeten Vorsprünge der Planetenradbolzen komplementäre Ausnehmungen aufweist.

Eine konstruktiv besonders günstige Ausgestaltung sieht vor, dass die ausgesparten Segmente der Planetenradbolzen radial nach innen weisen und die Vorsprünge der Planetenradbolzen mit den Ausnehmungen des Kupplungskörpers zusammenwirken.

In einer weiteren Ausgestaltung geht die Erfindung aus von einer Getriebeanordnung, umfassend ein Planetengetriebe mit einem jeweils ein Ende der Planetenradbolzen haltenden Planetenträger, einem damit verbundenen, das jeweils andere Ende der Planetenradbolzen haltenden Bolzenträger sowie ferner umfassend einen mit einem der beiden Träger verbundenen Kupplungskörper oder dergleichen. Dabei ist erfindungsgemäß vorgesehen, dass die Planetenradbolzen zumindest an einem ihrer Enden zumindest eine zur Bolzenlängsachse exzentrisch angeordnete Ausnehmung aufweisen und dass der Kupplungskörper Durchstellungen aufweist, die so ausgebildet und angeordnet sind, dass diese in die Ausnehmungen der Planetenradbolzen eingreifen, wodurch eine formschlüssige Verbindung zwischen Kupplungskörper und Planetenradbolzen entsteht. Durch die formschlüssige Verbindung zwischen Kupplungskörper und Planetenradbolzen, welche durch Eingreifen der Durchstellungen des Kupplungskörpers in die exzentrisch angeordneten Ausnehmungen in den Planetenradbolzen zustande kommt, sind die Planetenradbolzen drehgesichert.

Der Kupplungskörper ist hierbei vorzugsweise so ausgebildet, dass dieser in montiertem Zustand einen Längsanschlag für das, die Ausnehmung aufweisende Ende des Planetenradbolzens in Richtung des Kupplungskörpers bildet.

Wie ausgeführt wurde, bildet der Kupplungskörper in beiden Ausgestaltungen der Erfindung den Drehanschlag sowie einen Längsanschlag in einer ersten axialen Richtung. Für den Längsanschlag in der anderen axialen Richtung weisen beispielsweise die Planetenradbolzen jeweils an ihrem von dem ausgesparten Segment abgewandten Ende bzw. an ihrem von dem Ende mit der Ausnehmung abgewandten Ende einen Achsstummel mit einem gegenüber dem Bolzendurchmesser kleineren Durchmesser auf, welcher in einer dem Achsstummel entsprechenden Aufnahmebohrung des diesem Ende zugeordneten Trägers aufgenommen ist. Dabei liegt die zur Bolzenlängsachse rechtwinklige Übergangsfläche vom Bolzendurchmesser zum Durchmesser des Achsstummels an dem zugeordneten Träger an. Eine Stufung der Planetenradbolzen ist fertigungstechnisch einfacher herstellbar als eine Stufung der komplexer geformten und deshalb schwieriger zu spannenden Planeten- oder Bolzenträger etwa gemäß der oben genannten bekannten Druckschrift.

Alternativ kann der Längsanschlag in der anderen axialen Richtung auch über eine abgesetzte Bohrung im Bolzenträger realisiert werden, an welcher ein nicht abgesetzter Planetenradbolzen entsprechend zur Anlage kommt.

Der Kupplungskörper oder dergleichen stellt vorzugsweise ein eigenständiges Bauteil dar, welches mit dem zugeordneten Träger verbunden ist. Er ist beispielsweise ein Außenlamellenträger einer der Getriebeanordnung zugeordneten Schaltkupplung, wie an einem Ausführungsbeispiel im Einzelnen erläutert wird.

Auf die beschriebene Art und Weise übernimmt der ohnehin für den Anbau an einem der Träger vorgesehene Kupplungskörper oder dergleichen zusätzlich die Funktion, einen Drehanschlag und wenigstens einen der beiden erforderlichen Längsanschläge für alle Planetenradbolzen zu bilden, so dass gesonderte Einrichtungen für diese Aufgabe nicht erforderlich sind. Auf diese Weise wird einerseits die Anzahl der Bauteile für die Getriebeanordnung verringert, andererseits werden auch Montageschritte eingespart, da mit der Montage des Kupplungskörpers gleichzeitig Längs- und Drehanschläge gebildet werden.

Die Erfindung wird nachfolgend anhand der beiliegenden Zeichnung an einer Ausführungsform weiter erläutert. Darin zeigt
Fig. 1 einen Teillängsschnitt durch eine Getriebeanordnung mit einem daran angeordneten Außenlamellenträger,
Fig. 2 in perspektivischer Darstellung einen Planetenradbolzen gemäß Fig. 1.
Fig. 3 einen Teillängsschnitt durch eine Getriebeanordnung mit einem daran angeordneten Außenlamellenträger in einer zweiten Ausführungsform,
Fig. 4 einen Ausschnitt des Außenlamellenträgers gemäß Fig. 3,
Fig. 5 einen weiteren Ausschnitt des Außenlamellenträgers,
Fig. 6 einen Teillängsschnitt durch den Außenlamellenträger gemäß Fig. 5,
Fig. 7 einen Teillängsschnitt durch eine Getriebeanordnung mit einem daran angeordneten Außenlamellenträger in einer dritten Ausführungsform,
Fig. 8 einen Ausschnitt des Außenlamellenträgers gemäß Fig. 7 und
Fig. 9 in perspektivischer Darstellung einen Planetenradbolzen gemäß Fig. 7.

Gleiche Bauteile sind mit gleichen Bezugszeichen versehen.

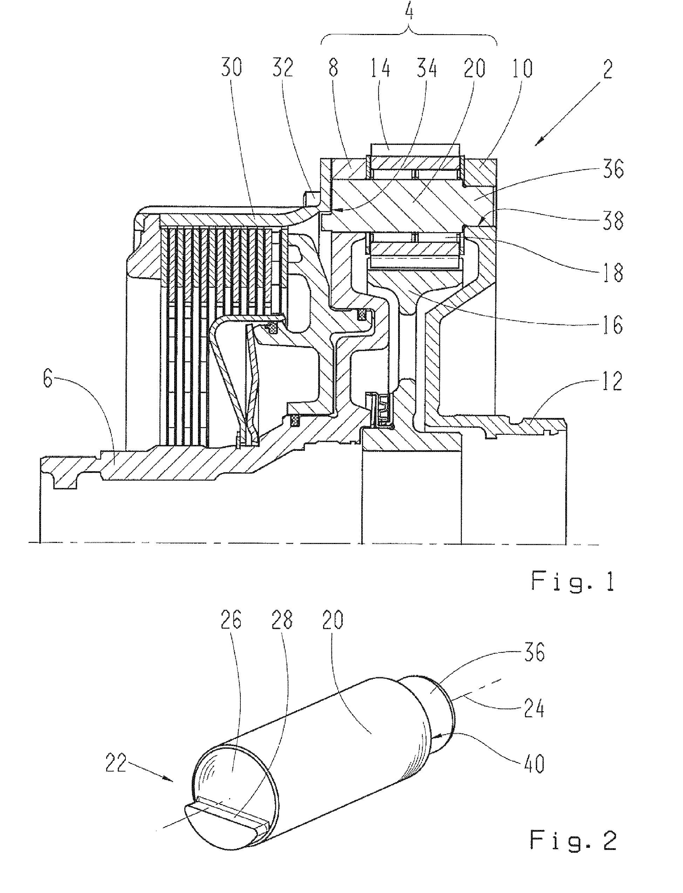

Fig. 1 zeigt demnach einen Teillängsschnitt durch eine Getriebeanordnung 2 mit einem Planetengetriebe 4, welches in an sich bekannter Weise einen Planetenträger 8 sowie einen mit diesem verschraubten Bolzenträger 10 umfasst. Der Planetenträger 8 weist eine Nabe 6 auf, welche im vorliegenden Fall mit dem Planetenträger 8 einstückig ausgebildet ist. Über die Nabe 6 des Planetenträgers 8 kann ein Drehmoment von dem Planetenträger 6 an ein weiterführendes Bauteil, beispielsweise an eine Welle, übertragen werden. Der Bolzenträger 10 weist seinerseits eine damit einstückig verbundene Abtriebsnabe 12 auf, die für den Antrieb weiterer Funktionselemente dienen kann. Zwischen dem Planetenträger 8 und dem Bolzenträger 10 sind Planetenräder 14 angeordnet, die mit einem Sonnenrad 16 kämmen, welches mit einer nicht dargestellten, durch die hohle Abtriebsnabe 12 hindurch geführten Welle verbunden ist. Vorzugsweise ist die durch die hohle Abtriebsnabe 12 hindurch geführte Welle als Hohlwelle ausgebildet, mit welcher das Sonnenrad 16 drehfest verbunden ist. Der Planetenträger 6 ist beispielsweise über die dem Planetengetriebe 2 zugeordnete Schaltkupplung oder über ein nicht dargestelltes mit den Planetenrädern 12 im Zahneingriff stehendes Hohlrad antreibbar. Auch ein kombinierter Antrieb des Planetenträgers 6 sowohl über die Schaltkupplung als auch über das Hohlrad ist möglich. Eine Drehmomentabstützung erfolgt vorzugsweise über das Sonnenrad 14, welches mit der durch die hohle Abtriebsnabe 12 hindurch geführten gehäusefesten Hohlwelle drehfest verbunden ist.

Die Planetenräder 14 sind jeweils über ein zweireihiges Wälzlager 18 auf einem zugeordneten Planetenradbolzen 20 drehgelagert, dessen eines, in der Fig. 1 linkes axiales Ende, vom Planetenträger 8 gehalten wird, und dessen anderes, rechtes axiales Ende, vom Bolzenträger 10 gehalten wird.

Die Planetenradbolzen 20 sind drehfest und axial unverschiebbar angeordnet. Wie insbesondere Fig. 2 zeigt, ist zu diesem Zweck am linken Ende des Planetenradbolzens 20 ein Segment 22 ausgespart, dessen zur Bolzenlängsachse 24 rechtswinklige erste Fläche 26 für eine Anlage an einem Längsanschlag und dessen zur Bolzenlängsachse 24 parallele Fläche 28 zur Anlage an einem Drehanschlag bestimmt ist, wie nachstehend erläutert wird. Durch die Aussparung des Segments 22 weist die erste Fläche 26 die Form eines Kreisabschnitts auf. Gemäß der Fig. 2 ist die Kreisabschnittsfläche etwas größer ausgebildet, als eine Halbkreisfläche.

Wie insbesondere Fig. 1 zeigt, ist am Planetenträger 8 ein als Außenlamellenträger ausgebildeter Kupplungskörper 30 angeordnet, welcher in an sich bekannter Weise die Außenlamellen einer dem Planetengetriebe 4 zugeordneten Schaltkupplung trägt. Der Kupplungskörper 30 ist als eigenständiges Bauteil ausgebildet, das mittels nur teilweise sichtbare Schrauben 32, die auch den Planetenträger 8 mit dem Bolzenträger 10 verbinden, mit dem Planetenträger 8 verschraubt ist. Der Kupplungskörper 30 weist eine zu den ausgesparten Segmenten 22 der Planetenradbolzen 20 komplementäre, in diese eingreifende stirnseitige Umfangskante 34 auf, die in Verbindung mit der zweiten Fläche 28 der Planetenradbolzen 20 den Drehanschlag, und in Verbindung mit der ersten Fläche 26 der Planetenradbolzen 20 einen eine Verschiebung des Planetenradbolzens 20 in der Fig. 1 nach links verhindernden Längsanschlag bildet.

Eine Bewegung der Planetenradbolzen 20 in Fig. 1 nach rechts wird dadurch verhindert, dass die Planetenradbolzen 20 jeweils an ihrem dem ausgesparten Segment 22 abgewandten Ende einen Achsstummel 36 mit einem gegenüber dem Bolzendurchmesser kleineren Durchmesser aufweisen, welcher in einer dem Achsstummel entsprechend ausgebildeten Aufnahmebohrung 38 des Bolzenträgers 10 aufgenommen ist, wobei die zur Bolzenlängsachse 24 rechtwinklige, radiale Übergangsfläche 40 vom Bolzendurchmesser zum Durchmesser des Achsstummels 36 an der axialen Innenseite des Bolzenträgers 10 anliegt, welche den zweiten Längsanschlag bildet.

Fig. 2 zeigt in perspektivischer Darstellung einen Planetenradbolzen 20 gemäß Fig. 1, bei welchem die mit dem Kupplungskörper 30 zusammenwirkenden Flächen 26 und 28 einerseits sowie die mit der Innenseite des Bolzenträgers 10 zusammenwirkende radiale Übergangsfläche 40 zu erkennen sind.

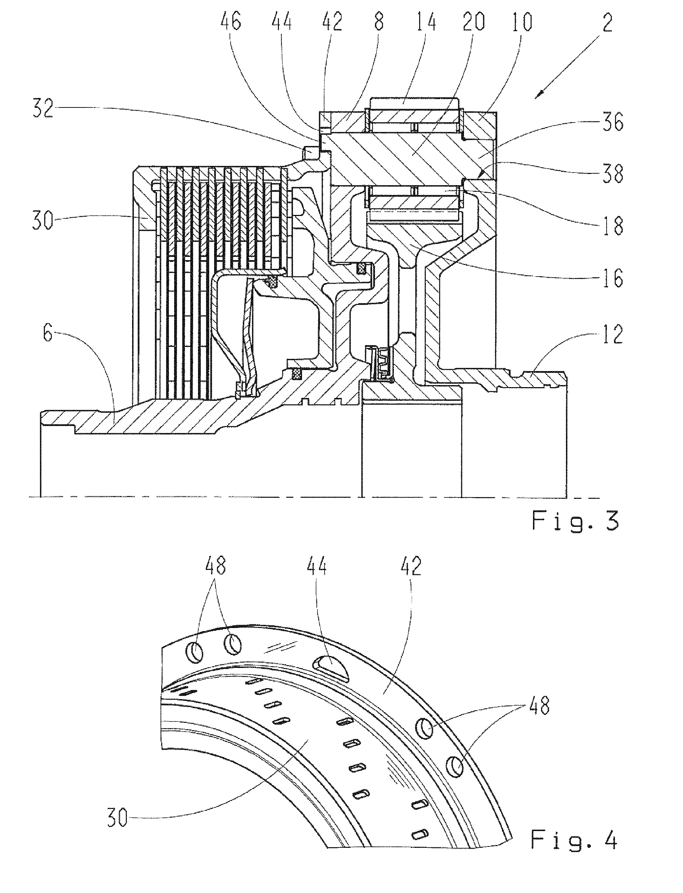

Fig. 3 zeigt eine zweite erfindungsgemäße Ausführungsform. Gemäß Fig. 3 weist der als Außenlamellenträger ausgebildete Kupplungskörper 30 einen Flansch 42 auf, in welchem Ausnehmungen 44 vorgesehen sind. Durch die Aussparung des Segments 22 an den Planetenradbolzen 20 weisen die Planetenradbolzen 20 entsprechende Vorsprünge 46 auf. Die Ausnehmungen 44 sind derart ausgebildet, dass diese eine zu den Vorsprüngen 46 der Planetenradbolzen 20 komplementäre Form aufweisen. In montiertem Zustand weisen die Vorsprünge 46 der Planetenradbolzen 20 in die entsprechenden Ausnehmungen 44 hinein, derart, dass in Verbindung mit der zweiten Fläche 28 der Planetenradbolzen 20 der Drehanschlag und in Verbindung mit der ersten Fläche 26 der Planetenradbolzen 20 der die Verschiebung des Planetenradbolzens 20 in der Fig. 3 nach links verhindernde Längsanschlag gebildet wird. Der zweite Längsanschlag wird entsprechend der Beschreibung der Fig. 1 gebildet, wodurch auch bei dieser Ausführungsform die Planetenradbolzen 20 drehfest und axial unverschiebbar angeordnet sind.

Fig. 4 zeigt in perspektivischer Darstellung einen Ausschnitt des Kupplungskörpers 30 gemäß Fig. 3, bei welchem eine Ausnehmung 44 in dem Flansch 42 des Kupplungskörpers 30 zu erkennen ist. Über den Flanschumfang sind vorzugsweise mehrere, beispielsweise sechs, Ausnehmungen 44 gleichmäßig verteilt. Die Ausnehmungen 44 können hierbei jeweils zwischen Durchganglöchern 48 zur Verschraubung des Kupplungskörpers 30 mit dem Planetenträger 8 angeordnet sein. In vorteilhafter Weise werden die Ausnehmungen 44 durch einen Stanzvorgang hergestellt, in welchem gleichzeitig auch die Durchgangslöcher 48 erzeugt werden.

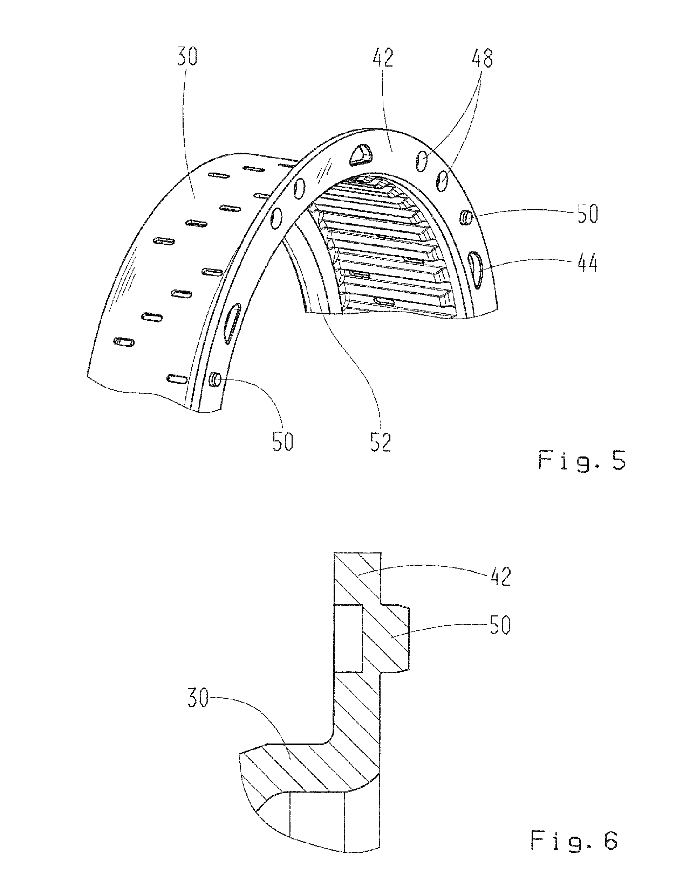

Fig. 5 zeigt in perspektivischer Darstellung einen Ausschnitt des Kupplungskörpers 30 gemäß Fig. 3 in einer weiteren Ausführungsform, bei welchem ebenfalls Ausnehmungen 44 in dem Flansch 42 des Kupplungskörpers 30 zu erkennen sind. Über den Flanschumfang sind auch hier vorzugsweise mehrere, beispielsweise sechs, Ausnehmungen 44 gleichmäßig verteilt, wobei die Ausnehmungen 44 hierbei jeweils zwischen Durchgangslöchern 48 zur Verschraubung des Kupplungskörpers 30 mit dem Planetenträger 8 angeordnet sein können.

Der Kupplungskörper 30 umfasst einen Anlageabschnitt 52, der aus einem radial nach innen weisenden Endstück des Kupplungskörpers 30 besteht. Somit sind die Außenlamellen einer dem Planetengetriebe 4 zugeordneten Schaltkupplung axial gegen den Anlageabschnitt 52 pressbar. Dadurch kann eine bauraumsparende und kostengünstige Kupplungsanordnung erzielt werden, da weder eine zusätzliche Endscheibe noch entsprechende Sicherungsringe benötigt werden, welche separat montiert werden müssen.

Der Kupplungskörper 30 weist in dem Flansch 42 außerdem noch Durchstellungen 50 zur Zentrierung des Kupplungskörpers 30 auf dem Planetenträger 8 auf. Die Durchstellungen 50 sind so ausgebildet und angeordnet, dass diese in korrespondierende Ausnehmungen, welche vorzugsweise als Bohrungen ausgebildet sind, im Planetenträger 8 eingreifen und somit zur Zentrierung des Kupplungskörpers 30 auf dem Planetenträger 8 dienen. Durch vorzugsweise drei über den Flanschumfang gleichmäßig verteilte Durchstellungen 50 kann eine sichere und einfache Zentrierung des Kupplungskörpers 30 auf dem Planetenträger 8 erfolgen.

Fig. 6 zeigt in einem Teillängsschnitt durch den Außenlamellenträger gemäß Fig. 5 eine Detailansicht einer Durchstellung 50 zur Zentrierung des Kupplungskörpers 30 auf dem Planetenträger 8, welche axial aus dem Flansch 42 herausgeformt ist. Die Durchstellung 50 wird beispielsweise dadurch hergestellt, dass ein Ober-Stempel einer der Durchstellungshöhe etwa entsprechenden Axiallänge und einem, dem Außenumfang der Durchstellung 50 etwa entsprechenden Stempelumfang in das den Flansch 42 bildende Material gedrückt wird. Beispielsweise liegt der Flansch 42 hierzu auf einem Loch-Unter-Stempel auf, der konzentrisch zum Ober-Stempel angeordnet ist und eine zu dem Außenumfang der Durchstellung 50 entsprechende Durchgangsöffnung aufweist. Der Ober-Stempel kann vorzugsweise kreiszylindrisch ausgebildet sein, wodurch die Durchstellung 50 dann ebenfalls eine kreiszylindrische Form aufweist. In vorteilhafter Weise kann das Prägen der Durchstellungen 50 sowie das Stanzen der Ausnehmungen 44 und der Durchgangslöcher 48 in nur einem Bearbeitungsvorgang erfolgen.

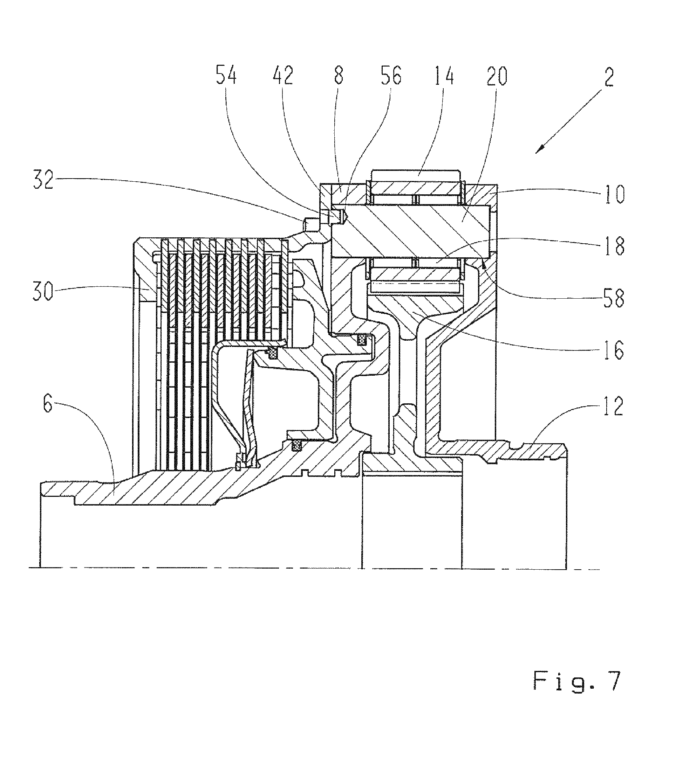

Fig. 7 zeigt eine dritte erfindungsgemäße Ausführungsform. Gemäß Fig. 7 weist der als Außenlamellenträger ausgebildete Kupplungskörper 30 einen Flansch 42 auf, in welchem Durchstellungen 54 zur Drehsicherung der Planetenradbolzen 20 vorgesehen sind. Jeder Planetenradbolzen 20 weist hierzu zumindest an einem seiner Enden 60 zumindest eine zur Bolzenlängsachse 24 exzentrisch angeordnete Ausnehmung 56 auf, welche vorzugsweise als Bohrung ausgebildet ist. Die Durchstellungen 54 am Kupplungskörper 30 sind derart ausgebildet und angeordnet, dass diese in montiertem Zustand des Kupplungskörpers 30 durch Eingreifen in die Ausnehmung 56 der Planetenradbolzen 20 Drehanschläge für die Planetenradbolzen 20 bilden, wodurch die Planetenradbolzen 20 drehgesichert sind.

In montiertem Zustand weisen die Durchstellungen 54 des Flansches 42 in die entsprechenden Ausnehmungen 56 hinein, derart, dass das die Ausnehmung 56 aufweisende Ende der Planetenradbolzen 20 an dem Flansch 42 des Kupplungskörpers 30 zur Anlage kommt, wodurch ein eine Verschiebung des Planetenradbolzens 20 in der Fig. 7 nach links verhindernder Längsanschlag gebildet wird. Der zweite Längsanschlag wird hier durch eine abgesetzte Bohrung 58 im Bolzenträger 10 realisiert, an welcher der nicht abgesetzte Planetenradbolzen 20 entsprechend zur Anlage kommt. Somit sind auch bei der dritten Ausführungsform die Planetenradbolzen 20 drehfest und axial unverschiebbar angeordnet.

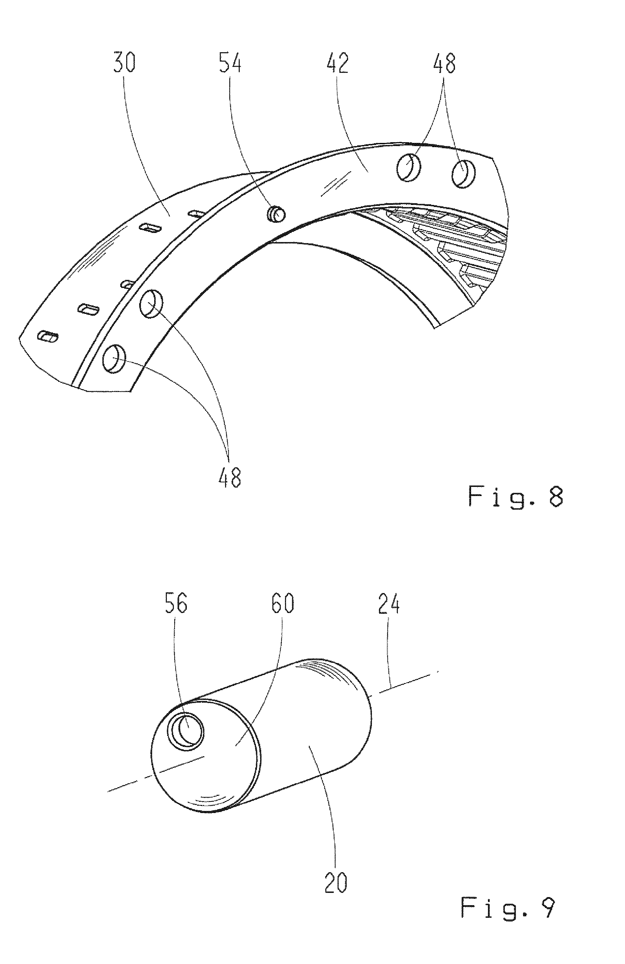

Fig. 8 zeigt in perspektivischer Darstellung einen Ausschnitt des Kupplungskörpers 30 gemäß Fig. 7, bei welchem eine Durchstellung 54 zur Drehsicherung eines Planetenradbolzens 20 in dem Flansch 42 des Kupplungskörpers 30 zu erkennen ist. Über den Flanschumfang sind vorzugsweise mehrere, beispielsweise sechs, Durchstellungen 54 gleichmäßig verteilt. Die Durchstellungen 54 können hierbei jeweils zwischen Durchgangslöchern 48 zur Verschraubung des Kupplungskörpers 30 mit dem Planetenträger 8 angeordnet sein. Vorzugsweise weist der Kupplungskörper gemäß Fig. 7 bzw. Fig. 8 neben den Durchstellungen 54 zur Drehsicherung der Planetenradbolzen 20 auch die hier nicht gezeigten Durchstellungen 50 zur Zentrierung des Kupplungskörpers 30 auf dem Planetenträger 8 auf, wie diese in Fig. 5 bzw. 6 beschrieben sind. Die Durchstellungen 54 zur Drehsicherung der Planetenradbolzen 20 können entsprechend der zu den Durchstellungen 50 zur Zentrierung des Kupplungskörpers 30 auf dem Planetenträger 8 beschriebenen Art und Weise hergestellt werden. In vorteilhafter Weise erfolgen das Prägen der Durchstellungen 54 zur Drehsicherung der Planetenradbolzen 20, das Prägen der Durchstellungen 50 zur Zentrierung des Kupplungskörpers 30 auf dem Planetenträger 8 sowie das Stanzen der Durchgangslöcher 48 in nur einem Bearbeitungsvorgang.

Fig. 9 zeigt in perspektivischer Darstellung einen Planetenradbolzen 20 gemäß Fig. 7, bei welchem die mit einer Durchstellung 54 zur Drehsicherung des Planetenradbolzens 20 zusammenwirkende Ausnehmung 56 in einem Ende 60 des Planetenradbolzens 20 zu erkennen ist, welche exzentrisch zur Bolzenlängsachse 24 angeordnet ist. Die Ausnehmung 56 ist hier als Bohrung realisiert.

### Bezugszeichenliste

- 2: Getriebeanordnung
- 4: Planetengetriebe
- 6: Nabe des Planetenträgers
- 8: Planetenträger
- 10: Bolzenträger
- 12: Abtriebsnabe
- 14: Planetenräder
- 16: Sonnenrad
- 18: Wälzlager
- 20: Planetenradbolzen
- 22: Segment
- 24: Bolzenlängsachse
- 26: Erste Fläche am Planetenradbolzen
- 28: Zweite Fläche am Planetenradbolzen
- 30: Kupplungskörper
- 32: Schrauben
- 34: Umfangskante des Kupplungskörpers
- 36: Achsstummel
- 38: Aufnahmebohrung
- 40: Radiale Übergangsfläche
- 42: Flansch des Kupplungskörpers
- 44: Ausnehmungen
- 46: Vorsprung am Planetenradbolzen
- 48: Durchgangslöcher
- 50: Durchstellung zur Zentrierung
- 52: Anlageabschnitt
- 54: Durchstellung zur Drehsicherung
- 56: Ausnehmung
- 58: Abgesetzte Bohrung
- 60: Ende des Planetenradbolzens

## Patentansprüche

1. Getriebeanordnung, umfassend ein Planetengetriebe (4) mit einem jeweils ein Ende der Planetenradbolzen (20) haltenden Planetenträger(8), einem damit verbundenen, das jeweils andere Ende der Planetenradbolzen (20) haltenden Bolzenträger(1 0), wobei zumindest an einem Ende eines jeden Planetenradbolzens (20) ein Segment (22) ausgespart ist, dessen zur Bolzenlängsachse (24) rechtwinklige erste Fläche (26) an einem Längsanschlag und dessen zur Bolzenlängsachse (24) parallele zweite Fläche (28) an einem Drehanschlag anliegt, sowie ferner umfassend einen mit einem der beiden Träger (8, 10) verbundenen Kupplungskörper(30), **dadurch gekennzeichnet, dass** der Kupplungskörper (30) so ausgebildet und angeordnet ist, dass er mit den jeweiligen ersten Flächen (26) und zweiten Flächen (28) der ausgesparten Segmente (22) der Planetenradbolzen (20) zusammenwirkende Längs- und Drehanschläge bildet.

2. Getriebeanordnung nach Anspruch 1, **dadurch gekennzeichnet, dass** der Kupplungskörper (30) eine zu den ausgesparten Segmenten (22) der Planetenradbolzen (20) komplementäre, in diese eingreifende Umfangskante (34) aufweist.

3. Getriebeanordnung nach Anspruch 1 oder 2, **dadurch gekennzeichnet, dass** die ausgesparten Segmente (22) der Planetenradbolzen (20) radial nach außen weisen und mit einer inneren Umfangskante (34) des Kupplungskörpers (30) zusammenwirken.

4. Getriebeanordnung nach Anspruch 1, **dadurch gekennzeichnet, dass** der Kupplungskörper (30) zu den durch die ausgesparten Segmente (22) gebildeten Vorsprünge (46) der Planetenradbolzen (20) komplementäre Ausnehmungen (44) aufweist.

5. Getriebeanordnung nach Anspruch 4, **dadurch gekennzeichnet, dass** die ausgesparten Segmente (22) der Planetenradbolzen (20) radial nach innen weisen und die Vorsprünge (46) der Planetenradbolzen (20) mit den Ausnehmungen (44) des Kupplungskörpers (30) zusammenwirken.

6. Getriebeanordnung, umfassend ein Planetengetriebe (4) mit einem jeweils ein Ende der Planetenradbolzen (20) haltenden Planetenträger (8), einem damit verbundenen, das jeweils andere Ende der Planetenradbolzen (20) haltenden Bolzenträger (10) sowie ferner umfassend einen mit einem der beiden Träger (8, 10) verbundenen Kupplungskörper (30), **dadurch gekennzeichnet, dass** die Planetenradbolzen (20) zumindest an einem ihrer Enden (60) zumindest eine zur Bolzenlängsachse (24) exzentrisch angeordnete Ausnehmung (56) aufweisen und dass der Kupplungskörper (30) Durchstellungen (54) aufweist, die so ausgebildet und angeordnet sind, dass diese durch Eingreifen in die Ausnehmungen (56) der Planetenradbolzen (20) Drehanschläge für die Planetenradbolzen (20) bilden.

7. Getriebeanordnung nach Anspruch 6, **dadurch gekennzeichnet, dass** der Kupplungskörper (30) so ausgebildet ist, dass dieser einen Längsanschlag für das, die Ausnehmung (56) aufweisende Ende (60) des Planetenradbolzens (20) in Richtung des Kupplungskörpers (30) bildet.

8. Getriebeanordnung nach Anspruch 6 oder 7, **dadurch gekennzeichnet, dass** der Bolzenträger (10) eine abgesetzte Bohrung (58) aufweist, welche einen Längsanschlag für das dem Ende (60) mit der Ausnehmung (56) abgewandten Ende des Planetenradbolzens (20) bildet.

9. Getriebeanordnung nach einem der Ansprüche 1 bis 7, **dadurch gekennzeichnet, dass** die Planetenradbolzen (20) jeweils an ihrem dem ausgesparten Segment (22) abgewandten Ende bzw. an ihrem dem Ende (60) mit der Ausnehmung (56) abgewandten Ende einen Achsstummel (36) mit einem gegenüber dem Bolzendurchmesser kleineren Durchmesser aufweisen, welcher in einer dem Achsstummel entsprechenden Aufnahmebohrung (38) des diesem Ende zugeordneten Trägers (10) aufgenommen ist, und dass die zur Bolzenlängsachse (24) rechtwinklige Übergangsfläche (40) vom Bolzendurchmesser zum Durchmesser des Achsstummels (30) an dem zugeordneten Träger (10) anliegt.

10. Getriebeanordnung nach einem der Ansprüche 1 bis 9, **dadurch gekennzeichnet, dass** der Kupplungskörper (30) ein eigenständiges Bauteil darstellt, welches mit dem zugeordneten Träger (8) verbunden ist.

11. Getriebeanordnung nach einem der Ansprüche 1 bis 10, **dadurch gekennzeichnet, dass** der Kupplungskörper (30) ein Außenlamellenträger einer der Getriebeanordnung (2) zugeordneten Schaltkupplung ist.
